# EUROPÄISCHE PATENTSCHRIFT

(11) **EP 4 034 410 B1**
(45) Veröffentlichungstag und Bekanntmachung des Hinweises auf die Patenterteilung: **18.06.2025**
(21) Anmeldenummer: 20776162.8
(22) Anmeldetag: 23.09.2020
(51) Int. Cl.: B60L 3/00, H02J 1/08, B60L 50/60, B60L 58/10, B60L 58/20, H02J 7/00, H02J 9/00

(54) **STEUEREINRICHTUNG FÜR EIN FAHRZEUG**
CONTROL DEVICE FOR A VEHICLE
DISPOSITIF DE COMMANDE POUR VÉHICULE

(30) Priorität: 26.09.2019 DE 102019214720
(43) Veröffentlichungstag der Anmeldung: 03.08.2022
(73) Patentinhaber: Robert Bosch GmbH, 70442 Stuttgart (DE)
(72) Erfinder: ROESNER, Ruben, 76774 Leimersheim (DE); ROSS, Hans-Leo, 64653 Lorsch (DE)
(86) Internationale Anmeldenummer: PCT/EP2020/076526
(87) Internationale Veröffentlichungsnummer: WO 2021/058538

(56) Entgegenhaltungen:
- EP-A1- 3 536 536
- DE-A1- 102016 215 564
- DE-A1- 102017 125 696
- DE-C1- 10 135 736
- US-A1- 2009 118 916
- US-A1- 2018 257 703
- US-A1- 2018 290 642
- US-A1- 2019 135 206
- US-B2- 10 044 209
- US-B2- 7 439 634

## Beschreibung

Die Erfindung betrifft eine Steuereinrichtung für ein Fahrzeug. Die Erfindung betrifft ferner ein Steuersystem für ein Fahrzeug. Die Erfindung betrifft ferner ein Verfahren zum Betreiben eines Steuersystems für ein Fahrzeug. Die Erfindung betrifft ferner ein Computerprogrammprodukt.

### Stand der Technik

Die Patentschrift DE 101 35 736 C1 offenbart ein Verfahren zum Ansteuern einer Kupplung einer Steer-by-Wire-Lenkanlage.

Die Patentschrift US 7,439,634 B2 offenbart ein System zum Verteilen von elektrischer Leistung.

Bekannte automatisierte Fahrfunktionen erfordern, insbesondere für den Fall, dass der Fahrer die Fahrzeugführung übernehmen soll, eine gewisse Überbrückungs- und Übergabezeit an den Fahrer, um den Fahrer wieder in die Lage zu versetzen, die Fahrsituation zu erfassen und richtige Fahrzeugführungsfunktionen wieder selbst zu übernehmen. Mögliche vom Fahrer zu übernehmende Fahrzeugführungsfunktionen nach einer Übergabezeit von einer automatisierten Fahrfunktion können z.B. Verzögern und Lenken des Fahrzeugs sein. In weiteren möglichen Fällen muss der Fahrer die Längs- und Querbewegungsfunktionen der automatisierten Fahrfunktionen korrigieren, um beispielsweise einen Überholvorgang zu beenden oder das Fahrzeug aus einer Straßenkreuzung, Baustelle, Tunnel, Bahngleisen, usw. zu führen.

DE 10 2016 215 564 A1 offenbart ein Verfahren zum Betreiben eines elektrischen Netzes eines Kraftfahrzeugs, bei dem ein Wert eines Parameters betreffend eine aktuelle Situation einer Stromversorgung von elektrischen Komponenten des elektrischen Netzes ermittelt wird und nur diejenigen elektrischen Komponenten des Netzes, die nicht für einen vordefinierten Notbetrieb des Kraftfahrzeugs notwendig sind, in Abhängigkeit von dem ermittelten Wert abgeschaltet werden.

DE 10 2015 008 005 A1 offenbart ein Verfahren zum Betreiben eines Kraftfahrzeugs, wobei ein erstes elektrisches Bordnetz eine erste Batterie und einen Generator aufweist, ein zweites elektrisches Bordnetz eine zweite Batterie aufweist und die Bordnetze über einen DC/DC-Wandler gekoppelt sind und elektrische Leistung aus der ersten Batterie und aus dem Generator mittels einer Spannungswandlung des DC/DC-Wandlers in das zweite Bordnetz übertragen wird. Das erste Bordnetz soll auch bei Ausfall der ersten Batterie und/oder bei einem Defekt des DC/DC-Wandlers das zweite Bordnetz versorgen können. Vorgeschlagen wird hierzu, dass eine Detektionseinrichtung den Ausfall der ersten Batterie und/oder des DC/DC-Wandlers detektiert und bei detektiertem Ausfall eine Umstelleinrichtung die Bordnetze miteinander kurzschließt und einen Reglersollwert des Generators auf eine Spannung des zweiten Bordnetz einstellt.

US 2018/257703 A1 offenbart Steuereinrichtung für ein Fahrzeug, aufweisend: Schnittstelle zum Anschließen an einem Kommunikationsnetz und Schnittstellen zum elektrischen Versorgen der Steuereinrichtung über zwei unabhängig redundante Niedervoltnetze, die jeweils galvanisch voneinander getrennt sind.

Insbesondere beim automatisierten Fahren ist es wesentlich, die sicherheitsrelevanten Funktionen auch fehlertolerant auszulegen, sodass elektronische Funktionen auch im Fehlerfall verfügbar sind. Hier hat die Redundanz eine doppelte Funktion, nämlich die Fehlerentdeckung und die Erhöhung der Verfügbarkeit der Funktion. Insbesondere bei Längs- und Querbewegungsfunktionen, wie z.B. die Umsetzung mittels Brems- und Lenksystemen ist dies während der Fahrt ein besonderes Risiko, weil (bei einem Ausfall relevanter Funktionen und Komponenten) das Fahrzeug plötzlich nicht mehr brems-, lenkbar, usw. wird. Die Kommunikation sowie die Spannungsversorgung sollte weitgehend unterbrechungsfrei umschaltbar sein, sodass die Fahrzeugfunktionen nicht in ihrer Performance schlagartig reduziert sind oder zu Schwingungen im Bremsen, Lenkung und Antriebsfunktionen führen.

### Offenbarung der Erfindung

Es ist eine Aufgabe der vorliegenden Erfindung, ein verbessertes Steuersystem für ein Fahrzeug bereitzustellen.

Die Aufgabe wird gemäß einem ersten Aspekt gelöst mit einem Steuergerät für ein Fahrzeug, aufweisend:
- Schnittstellen zum Anschließen an zwei unabhängig redundante Kommunikationsnetze, die jeweils galvanisch voneinander getrennt sind, wobei durch einen Ausfall eines ersten Kommunikationsnetzes Nachrichten zu der und von der Steuereinrichtung über ein zweites Kommunikationsnetz, und umgekehrt, übermittelbar sind; wobei sich ein Fehler in einem der Kommunikationsnetze nicht auf eine Funktionalität des anderen der Kommunikationsnetze auswirkt; und
- Schnittstellen zum elektrischen Versorgen der Steuereinrichtung über zwei unabhängig redundante Niedervoltnetze, die jeweils galvanisch voneinander getrennt sind, wobei bei einem Fehler in einem ersten Niedervoltnetz eine elektrische Versorgung der Steuereinrichtung über ein zweites Niedervoltnetz, und umgekehrt, durchführbar ist; wobei mittels der Steuereinrichtung elektrische Verbraucher des Fahrzeugs in Abhängigkeit von über die Schnittstellen übertragenen Diagnoseinformationen betreffend die Netze selektiv schaltbar sind, wobei durch das selektive Schalten der Verbraucher eine Mindestfunktionalität für sicherheitsrelevante Systeme des Fahrzeugs aufrechterhalten bleibt.

Dadurch wird eine Steuereinrichtung geschaffen, die im Fehlerfall eines der Netze immer noch mit elektrischer Energie versorgbar ist und Nachrichten übermitteln kann. Mit einer derart unabhängig redundanten Steuereinrichtung ist eine Überführung des Fahrzeugs bei einem Fehlerfall in einen sicheren Zustand unterstützt.

Gemäß einem zweiten Aspekt wird die Aufgabe gelöst mit einem Steuersystem für ein Fahrzeug, aufweisend:
- zwei unabhängig redundante Hochvoltnetze zum Bereitstellen von elektrischer Energie;
- zwei unabhängig redundante Niedervoltnetze zum Bereitstellen von elektrischer Steuerspannung; wobei die zwei Niedervoltnetze jeweils galvanisch voneinander getrennt sind, und
- zwei unabhängig redundante Kommunikationsnetze zum Übermitteln von Nachrichten zwischen an die Kommunikationsnetze angeschlossenen Steuereinrichtungen; wobei die zwei Kommunikationsnetze jeweils galvanisch voneinander getrennt sind und
- eine Degradationseinrichtung zum Diagnostizieren von Fehlern in den Netzen und zum selektiven Degradieren der an die Netze angeschlossenen Steuereinrichtungen, wobei das Steuersystem eine hinreichende Funktionalität für einen Fahrbetrieb des Fahrzeugs bietet,
- wobei die Steuereinrichtungen jeweils eine Steuereinrichtung nach Anspruch 1 sind.

Die Aufgabe wird gemäß einem dritten Aspekt gelöst mit einem Verfahren zum Betreiben eines Fahrzeugs, aufweisend die Schritte:
- Diagnostizieren von jeweils unabhängig redundant ausgebildeten und funktional miteinander verbundenen elektrischen Hochvolt-, Niedervolt- und elektrischen Kommunikationsnetzen eines Steuersystems des Fahrzeugs; wobei die Niedervoltnetze jeweils galvanisch voneinander getrennt sind und wobei die Kommunikationsnetze jeweils galvanisch voneinander getrennt sind;
- Übermitteln des Diagnoseergebnisses an unabhängig redundante Batteriemanagementeinrichtungen des Steuersystems, wobei ein Fehler in einer ersten Batteriemanagementeinrichtung eine Funktionalität einer zweiten Batteriemanagementeinrichtung, und umgekehrt, nicht beeinträchtigt; und
- Selektives Degradieren von an die elektrischen Hochvolt-, elektrischen Steuerspannungs- und elektrischen Kommunikationsnetze angeschlossenen Steuereinrichtungen in Abhängigkeit vom Diagnoseergebnis derart, dass an die elektrischen Energieversorgungs-, elektrischen Steuerspannungs- und elektrischen Kommunikationsnetze angeschlossene Steuereinrichtungen noch hinreichend funktional für einen sicheren Fahrbetrieb des Fahrzeugs sind; wobei durch das selektive Degradieren der Steuereinrichtungen eine Mindestfunktionalität für sicherheitsrelevante Systeme des Fahrzeugs aufrechterhalten bleibt.

Im Ergebnis wird mit dem vorgeschlagenen Verfahren ein unabhängiges vollredundantes Energie-, Versorgungsspannungs- und Kommunikationskonzept für ein Fahrzeug bereitgestellt, welches einen Fehlerfall partiell evakuieren und für einen sicheren Fahrbetrieb des Fahrzeugs so viel Funktionalität wie erforderlich bereitstellen kann. Im Ergebnis wird mit dem vorgeschlagenen Verfahren eine sogenannte ''weiche Degradation" von Funktionalitäten bereitgestellt, sodass es keine abrupten Funktionseinflüsse bzw. Funktionseinbußen gibt. Das vorgeschlagene Verfahren ist für alle Fahrzeugtypen geeignet, ist insbesondere jedoch für rein batterieelektrische Fahrzeugen nützlich, weil diese Fahrzeuge kein an einen Verbrennungsmotor gekoppeltes elektrisches Energieerzeugungssystem aufweisen und damit bei einem vollständigen Ausfall eines Hochvoltnetzes besonders beeinträchtigt sind.

Vorteilhaft wird mit dem vorgeschlagenen Verfahren eine Mindestfunktionalität für sicherheitsrelevante Systeme des Fahrzeugs (hinreichende Funktionalität) aufrechterhalten. Im Ergebnis können dadurch elektrische Versorgungsspannungen für die Steuergeräte und für die Aktuatoren sowie elektrische Energie zum Antreiben, Lenken oder Abbremsen des Fahrzeugs permanent bereitgestellt werden.

Die Aufgabe wird gemäß einem vierten Aspekt mit einem Computerprogramm gelöst.

Vorteilhafte Weiterbildungen des Verfahrens und des Steuersystems sind Gegenstand von abhängigen Ansprüchen.

Eine vorteilhafte Weiterbildung des Steuersystems sieht vor, dass die Degradationseinrichtung ein Diagnosemodul zum Durchführen der Diagnose und eine Batteriemanagementeinrichtung zum selektiven Degradieren der Steuereinrichtungen umfasst. Auf diese Weise wird gewissermaßen eine zentrale Intelligenz für das Steuersystem realisiert, welches eine Diagnose durchführt und die sprechenden Degradationen initiiert und durchführt.

Eine weitere vorteilhafte Weiterbildung des Steuersystems sieht vor, dass mittels des Diagnosemoduls eine präventive und/oder tatsächliche Diagnose von an die Netze angeschlossenen Leitungen und ein selektives Abschalten von an die Netze angeschlossenen Steuereinrichtungen initiierbar und durchführbar ist. Unter einer ''tatsächlichen Diagnose" versteht man in diesem Zusammenhang eine Diagnose aufgrund von ermittelten Messwerten und Nachrichten-Informationen. Je nach gewählter Sicherheitsstrategie kann dadurch hochdynamisch und -flexibel eine Degradation von Einrichtungen und Netzen vorgenommen werden.

Eine weitere vorteilhafte Weiterbildung des Steuersystems sieht vor, dass in einem Fehlerfall eines Hochvoltnetzes ein DC/DC-Wandler abschaltbar und ein Akkumulator zur elektrischen Versorgung eines der Niedervoltnetze zuschaltbar ist. Besonders hilfreich ist dies, falls nur DC/DC-Wandler für ein Erzeugen der 12V-Steuerspannung zum elektrischen Versorgen von elektronischen Steuergeräten vorgesehen ist.

Eine weitere vorteilhafte Weiterbildung des Steuersystems sieht vor, dass das Diagnosemodul und die Batteriemanagementeinrichtungen gegenseitig überwachbar ausgebildet sind. Dadurch wird eine Überwachung ''über Kreuz" realisiert, was eine Sicherheitsstufe des Steuersystems vorteilhaft erhöht.

Eine weitere vorteilhafte Weiterbildung des Steuersystems sieht vor, dass mittels der Batteriemanagementeinrichtung ein Zustand der Netze ermittelbar ist, wobei entsprechende Daten über Kommunikationsschnittstellen übermittelbar sind. Vorteilhaft ist dadurch eine Art ''zentrale Intelligenz" des Steuersystems realisiert, welches einen schnellen Informationsaustausch unterstützt.

Eine weitere vorteilhafte Weiterbildung des Verfahrens sieht vor, dass ein selektives Abschalten von elektrischen Verbrauchern verzögert oder mit vorgegebenen Degradationssteuersignalen durchgeführt wird. Dadurch wird ein zeitlich verzögertes Degradieren zum Durchführen einer ''weichen Degradation" realisiert.

Eine weitere vorteilhafte Weiterbildung des Verfahrens sieht vor, dass wenigstens eine der Steuereinrichtungen: Bremssteuergerät, Lenkungssteuergerät, Steuergerät für Fahrerassistenzsysteme, Steuergerät für Motormanagement für einen Fahrbetrieb des Fahrzeugs betriebsbereit gehalten wird. Dafür werden wenigstens zwei, noch besser mehrere, am besten alle Steuergeräte zu einem System verschaltet, mit denen grundlegende Funktionen des Fahrzeugs erhalten werden. Beispielsweise führt ein Ausfall einer elektrischen Steuerspannung eines Niedervoltnetzes nicht zu einem Ausfall von daran angeschlossenen elektronischen Steuergeräten.

Eine weitere vorteilhafte Weiterbildung des Verfahrens sieht vor, dass ein aufgrund einer Diagnose durchgeführtes selektives Abschalten von an die Netze angeschlossenen elektrischen Verbrauchern zu weichen Umschaltungen führt, bei denen das Fahrzeug keine abrupten Bewegungen ausführt. Vorteilhaft können dadurch ein Fahrkomfort und ein Sicherheitsniveau auch im Störungsfall des Fahrzeugs hoch gehalten werden.

Eine weitere vorteilhafte Weiterbildung des Steuersystems sieht vor, dass eines der Hochvoltnetze über einen Koppelschalter mit dem anderen Hochvoltnetz verbunden werden kann. Vorteilhaft kann dies für ein gegenseitiges Laden der Hochvoltbatterien, Reihenschaltung der Hochvoltbatterien, Energieausgleich der Hochvoltbatterien, usw. genutzt werden.

Die Erfindung wird im Folgenden mit weiteren Merkmalen und Vorteilen anhand von Figuren detailliert beschrieben. Die Figuren sind vor allem dazu gedacht, die erfindungswesentlichen Prinzipien zu verdeutlichen.

Offenbarte Verfahrensmerkmale ergeben sich analog aus entsprechenden offenbarten Vorrichtungsmerkmalen und umgekehrt. Dies bedeutet insbesondere, dass sich Merkmale, technische Vorteile und Ausführungen betreffend das Steuersystem in analoger Weise aus entsprechenden Ausführungen, Merkmalen und Vorteilen betreffend das Verfahren zum Betreiben eines Steuersystems für ein Fahrzeug ergeben und umgekehrt.

In den Figuren zeigt:
- Fig. 1: ein Blockschaltbild einer Ausführungsform eines vorgeschlagenen Steuersystems für ein Fahrzeug;
- Fig. 2: ein prinzipielles Blockschaltbild einer vorgeschlagenen Steuereinrichtung; und
- Fig. 3: eine prinzipielle Darstellung eines vorgeschlagenen Verfahrens zum Betreiben eines Steuersystems für ein Fahrzeug.

### Beschreibung von Ausführungsformen

Im Folgenden wird der Begriff "automatisiertes Fahrzeug" synonym in den Bedeutungen vollautomatisiertes Fahrzeug, teilautomatisiertes Fahrzeug, vollautonomes Fahrzeug und teilautonomes Fahrzeug verwendet (synonym: SAE Level 2/3, 4/5).

Die meisten Fehler, die eine sichere Fahrzeugführung eines automatisierten Fahrzeugs gefährden, basieren unter anderem auf Kaskaden, in denen z.B. ein Fehler in einer Hochvoltbatterie zu Abschaltungen führt, die über einen DC/DC-Wandler eine 12V-Batterie betreffen kann. Wenn die 12 V-Spannungsversorgung oder eine Kommunikation zu einer Steuerungselektronik eines Elektromotors (Inverter) unterbrochen ist, kann die Steuerungselektronik Batterieschütze öffnen und Energie des Hochvoltnetzes über Wicklungen des Elektromotors abbauen. Durch diverse vorgegebene Hochvolt-Regularien müssen folgende Abschaltkaskaden implementiert werden, die zu einer Hochvolt-Abschaltung führen:
- Ausfall Klemme 15, Sicherungsfall, Hochvolt-Enable-Leitung, Drahtbruch
- Ausfall Kommunikation zum Inverter, Batteriemanagementsysteme, Steuergerät für Aufnahme eines Fahrerwunsches (VCU), usw.
- HV-Interlock (Sicherungsfunktion zum Schutz vor Hochvolt-Beeinflussung)
- Inverter-Fehler, Hochvoltbatteriefehler, Fehler anderer Verbraucher (z.B. Kühler/Lüfter, usw.).
- kritische EMV-Einflüsse
- Fehlerhafte Zustände (wie z.B. fehlerhafte Crash-Detection)

Im Wesentlichen können alle genannten Fehler, bevor sie zum aktiven Abschalten führen, zu massiven Pulsationen im Hochvolt- und Niedervoltnetz des Fahrzeugs führen, die allgemein durch die Trägheit der Abschaltelemente (z.B. Sicherung, Schwellen in der Software, usw.) toleriert werden. Die Pulsationen belasten die 12V-Batterie in unerwünschter Weise und können deren Lebensdauer massiv reduzieren. Viele der 12V-Verbraucher, wie zum Beispiel Kühlerlüftermotor, EPS-Motor, ESP-Motor bzw. Aktuator, usw. haben auch das Potential, in bestimmten Situationen elektrische Energie in das Bordnetz zu speisen, was die Pulsationen im Bordnetz nochmals verstärken kann. Weiterhin kann das Fahrzeug durch Schwingungen im Antriebsantriebsstrang destabilisieren und/oder der Fahrer durch das Verhalten der Pedale oder des Lenkrads massiv irritiert werden.

Da solche Fehler in allen Verbrauchern und in den dazwischengeschalteten Leitungen auftreten können, wird eine selektive Abschaltung von Elementen bzw. Einrichtungen eines Steuersystems für ein Fahrzeug vorgeschlagen. Dabei wird eine Störungsursache erkannt bzw. präventiv diagnostiziert und als Konsequenz eine selektive Abschaltung von Elementen bzw. Einrichtungen des Steuersystems derart durchgeführt, dass eine grundlegende Fahrfunktion des Fahrzeugs immer noch bereitgestellt ist.

Erreicht wird dies dadurch, dass eine von einem Diagnosemodul diagnostizierte Störungsinformation einem Batteriemanagementsystem übermittelt wird, welches in Kombination mit dem Diagnosemodul die betroffenen elektrischen Kreise abschaltet und eine Energieversorgung der Niedervoltnetze auf verfügbare DC/DC-Energiequellen oder andere elektrische Energiequellen umschaltet. Erreicht wird dies dadurch, dass das Diagnosemodul als eine selektive Ab- bzw. Umschalteinrichtung fungiert.

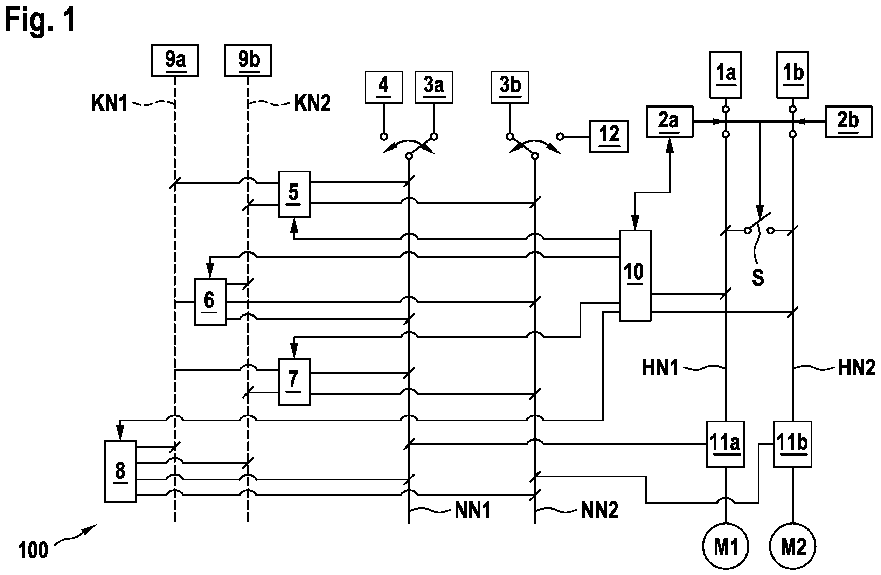

Fig. 1 zeigt eine elektrisch-elektronische Architektur (E/E-Architektur) eines vorgeschlagenen Steuersystems 100 für ein Fahrzeug, das eine vorgeschlagene Funktionalität bereitstellen kann. Erkennbar sind zwei unabhängig redundante Hochvoltbatterien 1a, 1b (mit z.B. 400V Gleichspannung), die jeweils ein Hochvoltnetz HN1, HN2 speisen und über jeweils über eine zugeordnete Batteriemanagementeinrichtung 2a, 2b an das Hochvoltnetz HN1, HN2 angeschaltet bzw. abgetrennt werden. Ferner kann mittels der Batteriemanagementeinrichtungen 2a, 2b ein Schalter S zum definierten Schalten (z.B. Laden, Ausgleichen von Ladungsenergie, in Serie schalten, usw.) der Hochvoltbatterien 1a, 1b angesteuert werden. Über jeweils eine Leistungselektronik 11a, 11b wird jeweils ein Elektromotor M1, M2 der Hochvoltnetze HN1, HN2 angesteuert.

Ferner erkennt man im Steuersystem 100 ein erstes Niedervoltnetz NV1 und ein zweites Niedervoltnetz NV2, die jeweils von einem DC/DC-Wandler 3a, 3b mit elektrischer 12V-Energie (elektrische Steuerspannung) gespeist sind. Vorteilhaft kann einem der Niedervoltnetze NV1 im Fehlerfall ein 12V-Akkumulator 4 zugeschaltet werden, was zum Beispiel dann besonders sinnvoll ist, wenn aufgrund eines Ausfalls der Hochvoltbatterien 1a, 1b in weiterer Folge auch die DC/DC-Wandler 3a, 3b keine 12V-Versorgungsspannung mehr für die Niedervoltnetze NN1, NN2 bereitstellen. Ferner kann an das Niedervoltnetz NN2 statt des DC/DC-Wandlers 3b auch eine Ladeeinrichtung 12 zugeschaltet werden. Mittels der Ladeeinrichtung 12 kann der 12-Akkumulator 4 geladen werden.

Vorgesehen sind im Steuersystem 100 ferner ein erstes Kommunikationsnetz KN1 und ein zweites Kommunikationsnetz KN2, die beispielsweise als ein CAN-Bus, Ethernet, usw. ausgebildet sein können. An die Kommunikationsnetze KN1, KN2 sind zentrale Kommunikationsschnittstellen 9a, 9b (Gateways) und ein Bremssteuergerät 8 (z.B. integrated power brake, IPB) zur lokalen Regelung eines drahtgesteuerten Bremsens bzw. Verzögerns des Fahrzeugs angeschlossen. Über die genannten Kommunikationsnetze KN1, KN1 werden Nachrichten zur Ansteuerung von elektronischen Steuergeräten des Steuersystems 100 übermittelt. Dabei können als elektronische Steuergeräte ein Lenkungssteuergerät 5, ein Steuergerät zur Aufnahme eines Fahrwunsches 6, ein Steuergerät zum automatisierten Fahren 7 und ein Bremssteuergerät 8 vorgesehen sein. Denkbar sind ferner noch weitere, nicht in Fig. 1 dargestellte elektronische Steuergeräte. Eine sogenannte ''Degradierbarkeit" von Netzen und Verbrauchern des Steuersystem 100 wird insbesondere durch ein Diagnosemodul 10 gesteuert, welches in Kooperation mit den Batteriemanagementsystemen 2a, 2b eine präventive Diagnose (z.B. Ermittlung von Widerstandsänderungen aufgrund von Leitungsbruch, Alterungseffekte, Vibrationen, Temperatureffekte, kurzfristige kritische elektrische Spannungsbedürfnisse, usw.) aller Leitungen aller Netze, HN1, HN2, NN1, NN2, KN1, KN2 vornimmt und dadurch ein selektives Schalten der an das Steuersystem 100 angeschlossenen Verbraucher und Erzeuger bzw. Steuereinrichtungen derart bewirkt, dass grundlegende Fahrfunktionen (z.B. Lenken, Bremsen, Steuern, Navigieren, usw.) des Fahrzeugs auch nach Vorliegen des Defekts immer noch bereitgestellt sind.

Mit dem vorgeschlagenen Steuersystem 100 für ein Fahrzeug sind dadurch folgende, im Folgenden nur exemplarisch genannte vorteilhafte Funktionen möglich:
Die elektrische Steuerspannung der 12V-Niedervoltnetze NN1, NN2 ist der Kommunikationsebene mit den Kommunikationsnetzen KN1, KN2 und den verfügbaren Redundanzen zugeordnet. Dies bedeutet, dass durch die Existenz der beiden unabhängig redundanten Niedervoltnetze NN1, NN2 und der beiden unabhängig redundanten Kommunikationsnetze KN1, KN2 die elektronischen Steuergeräte jeweils am selben Strang (Niedervolt- und Kommunikationsnetz) hängen, weil andernfalls die Verfügbarkeit bei einem Ausfall der 12V-Versorgung und der Kommunikation reduziert ist. Mit dem vorgeschlagenen Verfahren kann z.B. zwar ein elektronisches Steuergerät vollständig ausfallen, wobei aber die restlichen verfügbaren Steuergeräte die Nominalfunktion (meist mit reduzierter Performance) des ausgefallenen Steuergeräts aufrechterhalten oder eine degradierte Funktion der ausgefallenen Funktion bereitstellen können. Aufgrund der unabhängigen Redundanz ist es auf diese Weise vorteilhaft möglich, dass ein Fehler in einem der Netze NN1, NN2, KN1, KN2, HN1, HN2 eine Funktionalität jeweils eines anderen, dem jeweiligen Netz NN1, NN2, KN1, KN2, HN1, HN2 zugeordneten Netzes NN1, NN2, KN1, KN2, HN1, HN2 nicht beeinträchtigen kann. Wesentliche Systeme des Fahrzeugs zur Sicherstellung der Fahrt bis zu einem sicheren Stillstand oder Zustand (Fail-state oder Fail-operational-Zustand), wie Bremse und Lenkung sind jeweils an die beiden Kommunikationsnetze KN1, KN2 und an die beiden 12V-Niedervoltnetze NN1, NN2 angeschlossen, die jeweils galvanisch oder ''hinreichend sicher" voneinander getrennt sind.

Alle Hochvolt-Verbraucher sind vorzugsweise an die beiden Hochvoltnetze HN1, HN2 angeschlossen, damit Hochvolt-Abschaltungen sich nur auf einen Strang (mit Hochvolt-, Niedervolt- und Kommunikationsnetz) auswirken und ein Hochvolt-Verbraucher somit auch bei einer vollständigen Abschaltung eines HochvoltNetzes noch funktional ist. Der jeweilige Strang sollte vorzugsweise einmal dem ersten und einmal dem zweiten Niedervolt- und Kommunikationsnetz zugeordnet sein, damit Fehler im Hochvoltnetz sowie Hochvolt-betriebliche Abschaltungen nicht zu Fehlern in anderen Netzen führen können.

Das Diagnosemodul 10 ist insbesondere für präventive Diagnosen der Leitungen sämtlicher Netze mit Erfassung und/oder Simulation von elektrischen Leitungswiderständen und von elektrischen Strömen vorgesehen und kann den an die Netze angeschlossenen Verbrauchern entsprechende Informationen zur Verfügung stellen, damit definierte Verbraucher vor Auftreten eines Fehlers aus dem zugeordneten Netz präventiv abgeschaltet bzw. evakuiert werden können.

Zu den degradierbaren Verbrauchern zählt beispielsweise ein Steuergerät 7 für Fahrerassistenzsysteme, welches vorzugsweise an ein anderes Niedervoltnetz NN1, NN2 als ein Steuergerät 6 für ein Motor- und Thermomanagement angeschlossen ist. Vorteilhaft ist dadurch unterstützt, dass ein Ausfall bzw. Abschalten des Steuergeräts 7 für Fahrerassistenzsysteme wenigstens teilweise vom Steuergerät 6 für ein Motor- und Thermomanagement kompensiert werden kann und umgekehrt.

Man erkennt somit, dass Steuergeräte, Energiesysteme, Antriebe und Netze im vorgeschlagenen Steuersystem 100 derart angeordnet und funktional miteinander verbunden sind, dass in einem Fehlerfall des Fahrzeugs (z.B. aufgrund eines Unfalls) niemals sämtliche Steuergeräte, Energiesysteme, Antriebe und Netze gleichzeitig beschädigt werden bzw. ausfallen können.

Die Leitungsdiagnose durch das Diagnosemodul 10 sollte somit nicht nur die Diagnose der Hochvoltnetze HV1, HV2 realisieren, sondern zusätzlich auch noch eine Diagnose der Niedervoltnetze NV1, NV2 und dies zu einer möglichen Degradation konsolidieren. Mit dem Diagnosemodul 10 kann vorausschauend ein Um- und Abschalten sämtlicher an die Netze angeschlossenen Einrichtungen vorgenommen werden (engl. predictive maintenance).

Die Diagnoseinformationen betreffend das Niedervolt- und Hochvoltnetz werden möglichst in Echtzeit den Batteriemanagementeinrichtungen 2a, 2b zur Verfügung gestellt, damit diese Diagnoseinformationen zusammen mit Batteriezuständen der Hochvoltbatterien 1a, 1b erfasst werden. Auf diese Weise können die Batteriemanagementeinrichtungen 2a, 2b die entsprechenden Hochvoltnetze HN1, HN2 selektiv mittels Schütze und/oder Leistungsschalter 12a, 12b zur Vermeidung von Fehlerpropagation trennen oder abschalten. Die Batteriemanagementeinrichtungen 2a, 2b sind Steuergeräte, die über verschiedene festverdrahtete Signale und auch über Bussysteme (z.B. CAN-Bus, usw.) mit anderen Steuergeräten verbunden sind. Fehler in den Hochvoltnetzen, in den Verbindungen, in der Kommunikation, im Kühlwasser, usw. führen oftmals zu Anforderungen, dass die Batteriemanagementeinrichtung 2a, 2b dadurch Schütze öffnet und damit Stromkreise auftrennt.

Zusätzlich kann ein sogenannter ''Degradationsmanager" (nicht dargestellt) zum Steuern der vorgeschlagenen selektiven Degradation vorgesehen sein.

Kritische Verbraucher in den Niedervoltnetzen NN1, NN2 können durch das vorgeschlagene Monitoringsystem identifiziert und selektiv abgeschaltet werden, solange dadurch keine Verfügbarkeit einer wesentlichen Fahrzeugführungsfunktion gefährdet ist. Da alle Fahrzeugführungsfunktionen bereits heute redundante 12V-Versorgungen aufweisen, können mittels der Batteriemanagementeinrichtungen 2a, 2b kritische Kreise abgeschaltet werden, wie es für einen Notbetrieb des automatisierten Fahrzeugs erforderlich ist.

Ferner können die Batteriemanagementeinrichtungen 2a, 2b so auch kritische Kreise wegschalten, wie es für einen Notbetrieb des Steuersystems 100 notwendig ist. Mittels der Batteriemanagementeinrichtungen kann die 12V-Versorgung über die DC/DC-Wandler 3a, 3b aufrechterhalten werden, solange die HochvoltBatterien 1a, 1b in der Lage sind, die elektrische Energieversorgung auf niedrigem Niveau aufrechtzuerhalten.

Ferner können die Batteriemanagementeinrichtungen 2a, 2b, je nach Ursache der Fehler, auch die selektive Abschaltung der Hochvoltnetze HN1, HN2 und der Niedervoltnetze NN1, NN2 initiieren.

Mit dem vorgeschlagenen Steuersystem 100 kann ein Degradieren der Netze und der an die Netze angeschlossenen Einrichtungen derart durchgeführt werden, dass ein mit dem Steuersystem 100 ausgerüstetes Fahrzeug in einen sicheren Zustand überführbar ist.

Dazu ist vorgesehen, dass den Steuereinrichtungen übermittelte Nachrichten auf Konsistenz und Plausibilität betreffend Funktionalität von Fahrfunktionen des Fahrzeugs geprüft werden.

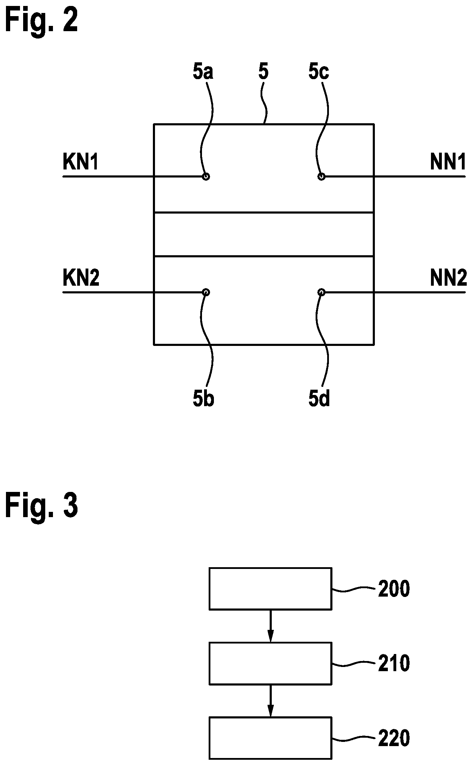

Fig. 2 zeigt ein prinzipielles Blockschaltbild eines Steuergeräts bzw. einer Steuereinrichtung, in diesem Fall ein Lenkungssteuergerät 5 des Fahrzeugs. Man erkennt zwei Eingänge 5a, 5b zum Anschließen an die beiden Kommunikationsnetze KN1, KN2 und zwei Eingänge 5c, 5d zum Anschließen an die Niedervoltnetze NN1, NN2 zum Bereitstellen 12V-Spannungsversorgung. Die Schnittstellen 5a, 5b bzw. 5c, 5d sind jeweils unabhängig redundant ausgeführt, was bedeutet, dass ein Ausfall eines angeschlossenen Netzes KN1, KN2, NN1, NN2 eine Funktionsweise des Steuergerätes nicht nachteilig beeinträchtigen kann. Eine galvanische Trennung der Eingänge 5a, 5c von den Eingängen 5b, 5d, die eine funktionale Unabhängigkeit der genannten Eingänge unterstützt, ist in Fig. 2 graphisch durch Trennlinien angedeutet. Dadurch ist sichergestellt, dass sowohl die übermittelten Nachrichten über die Kommunikationsnetze KN1, KN2 als auch die elektrische Versorgung über die Niedervoltnetze NN1, NN2 zu jeder Zeit, d.h. auch im Fehlerfall des Fahrzeugs gewährleistet sind.

Fig. 3 zeigt einen prinzipiellen Ablauf einer Ausführungsform des vorgeschlagenen Verfahrens.

In einem Schritt 200 erfolgt ein Diagnostizieren von jeweils unabhängig redundant ausgebildeten und funktional miteinander verbundenen elektrischen Hochvolt-, Niedervolt- und elektrischen Kommunikationsnetzen HN1, HN2, NN1, NN2, KN1, KN2 eines Steuersystems 100 des Fahrzeugs.

In einem Schritt 210 erfolgt ein Übermitteln des Diagnoseergebnisses an unabhängig redundante Batteriemanagementeinrichtungen 2a, 2b des Steuersystems 100, wobei ein Fehler in einer ersten Batteriemanagementeinrichtung eine Funktionalität einer zweiten Batteriemanagementeinrichtung, und umgekehrt, nicht beeinträchtigt.

In einem Schritt 220 erfolgt ein selektives Degradieren von Einrichtungen der elektrischen Hochvolt-, elektrischen Steuerspannungs- und elektrischen Kommunikationsnetze HN1, HN2, NN1, NN2, KN1, KN2 in Abhängigkeit vom Diagnoseergebnis derart, dass an die elektrischen Energieversorgungs-, elektrischen Steuerspannungs- und elektrischen Kommunikationsnetze HN1, HN2, NN1, NN2, KN1, KN2 angeschlossene Einrichtungen noch hinreichend funktional sind.

Vorteilhaft kann das vorgeschlagene Verfahren in Form eines Softwareprogramms mit geeigneten Programmcodemitteln realisiert werden, die auf dem Diagnosemodul 10 und den Batteriemanagementeinrichtungen 2a, 2b abläuft. Eine einfache Adaptierbarkeit des Verfahrens ist auf diese Weise möglich.

Im Ergebnis kann dadurch ein System aus miteinander verschalteten Steuergeräten realisiert werden, das für eine definierte Funktionalität wenigstens ein Steuergerät, das zugeordnete Informationen bzw. Daten über ein Kommunikationsnetz bereitstellt und ein zugeordnetes Steuergerät, das die Informationen über das Kommunikationsnetz empfängt und in Aktuation für das Fahrzeug umsetzt.

Ein typisches Anwendungsszenario der Erfindung könnte ein automatisiertes Fahrzeug mit Funktionen höher als SAE-Level 2 sein, bei dem während des Fahrbetriebs der Fahrer für einen definierten Zeitraum durch ein maschinelles System ersetzt wird.

Der Fachmann wird die Merkmale der Erfindung in geeigneter Weise miteinander kombinieren, ohne vom Kern der Erfindung abzuweichen.

## Patentansprüche

1. Steuereinrichtung (5; 6; 7; 8; 10) für ein Fahrzeug, aufweisend:
- Schnittstellen (5a, 5b) zum Anschließen an zwei unabhängig redundante Kommunikationsnetze (KN1, KN2), die jeweils galvanisch voneinander getrennt sind, wobei durch einen Ausfall eines ersten Kommunikationsnetzes (KN1) Nachrichten zu der und von der Steuereinrichtung (5; 6; 7; 8; 10) über ein zweites Kommunikationsnetz (KN2), und umgekehrt, übermittelbar sind, wobei ein Ausfall eines angeschlossenen Kommunikationsnetzes (KN1,KN2) eine Funktionsweise der Steuereinrichtung (5;6;7;8;10) nicht nachteilig beeinträchtigen kann;
- Schnittstellen (5c, 5d) zum elektrischen Versorgen der Steuereinrichtung (5; 6; 7; 8; 10) über zwei unabhängig redundante Niedervoltnetze (NN1, NN2), die jeweils galvanisch voneinander getrennt sind, wobei bei einem Fehler in einem ersten Niedervoltnetz (NN1) eine elektrische Versorgung der Steuereinrichtung (5; 6; 7; 8; 10) über ein zweites Niedervoltnetz (NN2), und umgekehrt, durchführbar ist, wobei die Steuereinrichtung (5; 6; 7; 8; 10) ein Diagnosemodul (10) umfasst, wobei das Diagnosemodul (10) in Kooperation mit Batteriemanagementsystemen des Fahrzeugs eine präventive Diagnose aller Leitungen aller Netze des Fahrzeugs vornimmt und dadurch elektrische Verbraucher und Erzeuger des Fahrzeugs in Abhängigkeit von über die Schnittstellen (5a, 5b; 6a, 6b; 7a, 7b; 8a, 8b; 10a, 10b) übertragenen Diagnoseinformationen betreffend die Netze (KN1, KN2, NN1, NN2) selektiv schaltbar sind, wobei durch das selektive Schalten der Verbraucher eine Mindestfunktionalität für sicherheitsrelevante Systeme des Fahrzeugs aufrechterhalten bleibt.

2. Steuersystem (100) für ein Fahrzeug (100), aufweisend:
- zwei unabhängig redundante Hochvoltnetze (HN1, HN2) zum Bereitstellen von elektrischer Energie;
- zwei unabhängig redundante Niedervoltnetze (NN1, NN2) zum Bereitstellen von elektrischer Steuerspannung, wobei die zwei Niedervoltnetze (NN1, NN2) jeweils galvanisch voneinander getrennt sind, wobei sich ein Fehler in einem der Niedervoltnetze (NN1, NN2) nicht auf eine Funktionalität des anderen der Niedervoltnetze (NN1, NN2) auswirkt; und
- zwei unabhängig redundante Kommunikationsnetze (KN1, KN2) zum Übermitteln von Nachrichten zwischen an die Kommunikationsnetze (KN1, KN2) angeschlossenen Steuereinrichtungen (5; 6; 7; 8; 10), wobei die zwei Kommunikationsnetze (KN1, KN2) jeweils galvanisch voneinander getrennt sind, wobei sich ein Fehler in einem der Kommunikationsnetze (KN1, KN2) nicht auf eine Funktionalität des anderen der Kommunikationsnetze (KN1, KN2) auswirkt; und
- eine Degradationseinrichtung (10, 2a, 2b) zum Diagnostizieren von Fehlern in den Netzen (HN1, HN2, NN1, NN2, KN1, KN2) und zum selektiven Degradieren der an die Netze (HN1, HN2, NN1, NN2, KN1, KN2) angeschlossenen Steuereinrichtungen (5; 6; 7; 8; 10), wobei das Steuersystem (100) eine hinreichende Funktionalität für einen Fahrbetrieb des Fahrzeugs bietet,
- wobei die Steuereinrichtungen (5; 6; 7; 8; 10) jeweils eine Steuereinrichtung (5; 6; 7; 8; 10) nach Anspruch 1 sind.

3. Steuersystem (100) nach Anspruch 2, **dadurch gekennzeichnet, dass** die Degradationseinrichtung (10, 2a, 2b) ein Diagnosemodul (10) zum Durchführen der Diagnose und eine Batteriemanagementeinrichtung (2a, 2b) zum selektiven Degradieren der Steuereinrichtungen (5; 6; 7; 8; 10) umfasst, wobei in Abhängigkeit vom Diagnoseergebnis die Steuereinrichtungen derart abgeschaltet werden, dass die Steuereinrichtungen noch hinreichend funktional für einen sicheren Fahrbetrieb des Fahrzeugs sind.

4. Steuersystem (100) nach Anspruch 3, **dadurch gekennzeichnet, dass** mittels des Diagnosemoduls (10) eine präventive und/oder tatsächliche Diagnose von an die Netze (HN1, HN2, NN1, NN2, KN1, KN2) angeschlossenen Leitungen und ein selektives Abschalten von an die Netze (HN1, HN2, NN1, NN2, KN1, KN2) angeschlossenen Steuereinrichtungen initiierbar und durchführbar ist, wobei unter präventiver Diagnose eine Diagnose vor Auftreten eines Fehlers aus dem zugeordneten Netz verstanden wird und wobei unter tatsächlicher Diagnose eine Diagnose aufgrund von ermittelten Messwerten und Nachrichten-Informationen verstanden wird.

5. Steuersystem (100) nach einem der Ansprüche 2 bis 4, **dadurch gekennzeichnet, dass** in einem Fehlerfall eines Hochvoltnetzes (HN1, HN2) ein DC/DC-Wandler (3a, 3b) abschaltbar und ein Akkumulator (4) zur elektrischen Versorgung eines der Niedervoltnetze (NN1, NN2) zuschaltbar ist.

6. Steuersystem (100) nach einem der Ansprüche 2 bis 5, **dadurch gekennzeichnet, dass** das Diagnosemodul (10) und die Batteriemanagementeinrichtungen (2a, 2b) gegenseitig überwachbar ausgebildet sind.

7. Steuersystem (100) nach einem der Ansprüche 2 bis 6, **dadurch gekennzeichnet, dass** mittels der Batteriemanagementeinrichtungen (2a, 2b) ein Zustand der Netze (HN1, HN2, NN1, NN2, KN1, KN2) ermittelbar ist, wobei entsprechende Daten über Kommunikationsschnittstellen (9a, 9b) übermittelbar sind.

8. Verfahren zum Betreiben eines Fahrzeugs, aufweisend die Schritte:
- Diagnostizieren von jeweils unabhängig redundant ausgebildeten und funktional miteinander verbundenen elektrischen Hochvolt-, Niedervolt- und elektrischen Kommunikationsnetzen (HN1, HN2, NN1, NN2, KN1, KN2) eines Steuersystems (100) des Fahrzeugs, wobei die Niedervoltnetze (NN1, NN2) jeweils galvanisch voneinander getrennt sind und wobei die Kommunikationsnetze (KN1, KN2) jeweils galvanisch voneinander getrennt sind;
- Übermitteln des Diagnoseergebnisses an unabhängig redundante Batteriemanagementeinrichtungen (2a, 2b) des Steuersystems (100), wobei ein Fehler in einer ersten Batteriemanagementeinrichtung eine Funktionalität einer zweiten Batteriemanagementeinrichtung, und umgekehrt, nicht beeinträchtigt; und
- Selektives Degradieren von an die elektrischen Hochvolt-, elektrischen Steuerspannungs- und elektrischen Kommunikationsnetze (HN1, HN2, NN1, NN2, KN1, KN2) angeschlossenen Steuereinrichtungen (5; 6; 7; 8; 10) in Abhängigkeit vom Diagnoseergebnis derart, dass an die elektrischen Energieversorgungs-, elektrischen Steuerspannungs- und elektrischen Kommunikationsnetze (HN1, HN2, NN1, NN2, KN1, KN2) angeschlossene Steuereinrichtungen (5; 6; 7; 8; 10) noch hinreichend funktional für einen sicheren Fahrbetrieb des Fahrzeugs sind, wobei durch das selektive Degradieren der Steuereinrichtungen (5; 6; 7; 8; 10) in Abhängigkeit vom Diagnoseergebnis die Steuereinrichtungen derart abgeschaltet werden, dass eine Mindestfunktionalität für sicherheitsrelevante Systeme des Fahrzeugs aufrechterhalten bleibt.

9. Verfahren nach Anspruch 8, wobei ein selektives Abschalten von elektrischen Verbrauchern verzögert oder mit vorgegebenen Degradationssteuersignalen durchgeführt wird.

10. Verfahren nach Anspruch 8 oder 9, wobei ein selektives Abschalten von elektrischen Einrichtungen, die für das Erfüllen von notwendigen Fahrfunktionen des Fahrzeugs nicht notwendig sind, durchgeführt wird.

11. Verfahren nach Anspruch 10, wobei wenigstens eine der Steuereinrichtungen: Bremssteuergerät (8), Lenkungssteuergerät (5), Steuergerät für Fahrerassistenzsysteme (7), Steuergerät für Motormanagement (8) für einen Fahrbetrieb des Fahrzeugs betriebsbereit gehalten wird.

12. Verfahren nach einem der vorhergehenden Ansprüche, wobei eines der Hochvoltnetze (HN1, HN2) über einen Koppelschalter (S) mit dem anderen Hochvoltnetz (HN1, HN2) verbunden werden kann.

13. Verfahren nach einem der vorhergehenden Ansprüche, wobei ein aufgrund einer Diagnose durchgeführtes selektives Abschalten von an die Netze angeschlossenen elektrischen Verbrauchern zu weichen Umschaltungen führt, bei denen das Fahrzeug keine abrupten Bewegungen ausführt.

14. Computerprogramm mit Programmcodemitteln eingerichtet zur Durchführung des Verfahrens nach einem der Ansprüche 8 bis 13 wenn es auf einer Degradationseinrichtung (10, 2a, 2b) abläuft oder auf einem computerlesbaren Datenträger gespeichert ist.

## Claims

1. Control apparatus (5; 6; 7; 8; 10) for a vehicle, having:
- interfaces (5a, 5b) for connecting to two independently redundant communication networks (KN1, KN2) that are each galvanically isolated from one another, wherein, in the event of a failure of a first communication network (KN1), messages are able be transmitted to and from the control apparatus (5; 6; 7; 8; 10) by way of a second communication network (KN2), and vice versa, wherein a failure of a connected communication network (KN1, KN2) is not able to adversely affect the functioning of the control apparatus (5; 6; 7; 8; 10); and
- interfaces (5c, 5d) for supplying electrical power to the control apparatus (5; 6; 7; 8; 10) by way of two independently redundant low-voltage networks (NN1, NN2) that are each galvanically isolated from one another, wherein, in the event of a fault in a first low-voltage network (NN1), electrical power is able to be supplied to the control apparatus (5; 6; 7; 8; 10) by way of a second low-voltage network (NN2), and vice versa, wherein the control apparatus (5; 6; 7; 8; 10) comprises a diagnostic module (10), wherein the diagnostic module (10) performs a preventative diagnosis of all the lines of all the networks of the vehicle in cooperation with battery management systems of the vehicle and electrical loads and generators of the vehicle are consequently able to be selectively switched depending on diagnostic information, which is transmitted by way of the interfaces (5a, 5b; 6a, 6b; 7a, 7b; 8a, 8b; 10a, 10b) and concerns the networks (KN1, KN2, NN1, NN2), wherein a minimum functionality for safety-relevant systems of the vehicle is maintained by the selective switching of the loads.

2. Control system (100) for a vehicle (100), having:
- two independently redundant high-voltage networks (HN1, HN2) for providing electrical energy;
- two independently redundant low-voltage networks (NN1, NN2) for providing electrical control voltage, wherein the two low-voltage networks (NN1, NN2) are each galvanically isolated from one another, wherein a fault in one of the low-voltage networks (NN1, NN2) does not affect a functionality of the other of the low-voltage networks (NN1, NN2); and
- two independently redundant communication networks (KN1, KN2) for transmitting messages between control apparatuses (5; 6; 7; 8; 10) connected to the communication networks (KN1, KN2), wherein the two communication networks (KN1, KN2) are each galvanically isolated from one another, wherein a fault in one of the communication networks (KN1, KN2) does not affect a functionality of the other of the communication networks (KN1, KN2); and
- a degradation apparatus (10, 2a, 2b) for diagnosing faults in the networks (HN1, HN2, NN1, NN2, KN1, KN2) and for selectively degrading the control apparatuses (5; 6; 7; 8; 10) connected to the networks (HN1, HN2, NN1, NN2, KN1, KN2), wherein the control system (100) offers a sufficient functionality for a driving mode of the vehicle,
- wherein the control apparatuses (5; 6; 7; 8; 10) are in each case a control apparatus (5; 6; 7; 8; 10) according to Claim 1.

3. Control system (100) according to Claim 2, **characterized in that** the degradation apparatus (10, 2a, 2b) comprises a diagnostic module (10) for carrying out the diagnosis and a battery management apparatus (2a, 2b) for selectively degrading the control apparatuses (5; 6; 7; 8; 10), wherein, depending on the result of the diagnosis, the control apparatuses are deactivated in such a way that the control apparatuses are still sufficiently functional for a safe driving mode of the vehicle.

4. Control system (100) according to Claim 3, **characterized in that** a preventative and/or actual diagnosis of lines connected to the networks (HN1, HN2, NN1, NN2, KN1, KN2) and a selective deactivation of control apparatuses connected to the networks (HN1, HN2, NN1, NN2, KN1, KN2) are able to be initiated and carried out by means of the diagnostic module (10), wherein preventative diagnosis is understood to mean a diagnosis before the occurrence of a fault from the associated network, and wherein actual diagnosis is understood to mean a diagnosis on the basis of ascertained measured values and message information.

5. Control system (100) according to one of Claims 2 to 4, **characterized in that**, in the event of a fault in a high-voltage network (HN1, HN2), a DC/DC converter (3a, 3b) is able to be deactivated and a rechargeable battery (4) is able to be activated in order to supply electrical power to one of the low-voltage networks (NN1, NN2).

6. Control system (100) according to one of Claims 2 to 5, **characterized in that** the diagnostic module (10) and the battery management apparatuses (2a, 2b) are designed to be able to be mutually monitored.

7. Control system (100) according to one of Claims 2 to 6, **characterized in that** a state of the networks (HN1, HN2, NN1, NN2, KN1, KN2) is able to be ascertained by means of the battery management apparatuses (2a, 2b), wherein corresponding data are able to be transmitted by way of communication interfaces (9a, 9b).

8. Method for operating a vehicle, having the steps of:
- diagnosing electrical high-voltage, low-voltage and electrical communication networks (HN1, HN2, NN1, NN2, KN1, KN2) of a control system (100) of the vehicle, which are each independently redundantly designed and are functionally connected to one another, wherein the low-voltage networks (NN1, NN2) are each galvanically isolated from one another, and wherein the communication networks (KN1, KN2) are each galvanically isolated from one another;
- transmitting the result of the diagnosis to independently redundant battery management apparatuses (2a, 2b) of the control system (100), wherein a fault in a first battery management apparatus does not adversely affect a functionality of a second battery management apparatus, and vice versa; and
- selectively degrading control apparatuses (5; 6; 7; 8; 10), which are connected to the electrical high-voltage, electrical control voltage and electrical communication networks (HN1, HN2, NN1, NN2, KN1, KN2), depending on the result of the diagnosis in such a way that control apparatuses (5; 6; 7; 8; 10) connected to the electrical energy supply, electrical control voltage and electrical communication networks (HN1, HN2, NN1, NN2, KN1, KN2) are still sufficiently functional for a safe driving mode of the vehicle, wherein, as a result of the selective degrading of the control apparatuses (5; 6; 7; 8; 10), depending on the result of the diagnosis, the control apparatuses are deactivated in such a way that a minimum functionality for safety-relevant systems of the vehicle is maintained.

9. Method according to Claim 8, wherein a selective deactivation of electrical loads is carried out with a delay or using predetermined degradation control signals.

10. Method according to Claim 8 or 9, wherein a selective deactivation of electrical apparatuses that are not necessary for performing necessary driving functions of the vehicle is carried out.

11. Method according to Claim 10, wherein at least one of the control apparatuses: brake control unit (8), steering control unit (5), control unit (7) for driver assistance systems, control unit (8) for engine management is kept ready for operation for a driving mode of the vehicle.

12. Method according to one of the preceding claims, wherein one of the high-voltage networks (HN1, HN2) is able to be connected to the other high-voltage network (HN1, HN2) by way of a coupling switch (S).

13. Method according to one of the preceding claims, wherein a selective deactivation of electrical loads connected to the networks carried out on the basis of a diagnosis results in soft switching operations in which the vehicle does not carry out any abrupt movements.

14. Computer program comprising program code means, configured to carry out the method according to one of Claims 8 to 13 when it runs on a degradation apparatus (10, 2a, 2b) or is stored on a computer-readable data carrier.

## Revendications

1. Dispositif de commande (5 ; 6 ; 7 ; 8 ; 10) pour un véhicule, présentant :
- des interfaces (5a, 5b) pour la connexion à deux réseaux de communication (KN1, KN2) indépendamment redondants qui sont respectivement séparés galvaniquement l'un de l'autre, dans lequel suite à une panne d'un premier réseau de communication (KN1), des messages peuvent être transmis au et du dispositif de commande (5 ; 6 ; 7 ; 8 ; 10) par un deuxième réseau de communication (KN2) et inversement, dans lequel une panne d'un réseau de communication (KN1, KN2) connecté ne peut pas affecter négativement un mode de fonctionnement du dispositif de commande (5 ; 6 ; 7 ; 8 ; 10) ; et
- des interfaces (5c, 5d) pour l'alimentation électrique du dispositif de commande (5 ; 6 ; 7 ; 8 ; 10) par deux réseaux basse tension (NN1, NN2) indépendamment redondants qui sont respectivement séparés galvaniquement l'un de l'autre, dans lequel, en cas de panne dans un premier réseau basse tension (NN1), une alimentation électrique du dispositif de commande (5 ; 6 ; 7 ; 8 ; 10) peut être effectuée par un deuxième réseau basse tension (NN2) et inversement, dans lequel le dispositif de commande (5 ; 6 ; 7 ; 8 ; 10) comprend un module de diagnostic (10), dans lequel le module de diagnostic (10), en coopération avec des systèmes de gestion de batterie du véhicule, procède à un diagnostic préventif de toutes les lignes de tous les réseaux du véhicule, permettant ainsi de commuter sélectivement des consommateurs et producteurs électriques du véhicule en fonction d'informations de diagnostic concernant les réseaux (KN1, KN2, NN1, NN2) transmises par les interfaces (5a, 5b ; 6a, 6b ; 7a, 7b ; 8a, 8b ; 10a, 10b), dans lequel la commutation sélective des consommateurs permet de maintenir une fonctionnalité minimale pour des systèmes de sécurité du véhicule.

2. Système de commande (100) pour un véhicule (100), présentant :
- deux réseaux haute tension (HN1, HN2) indépendamment redondants pour fournir de l'énergie électrique ;
- deux réseaux basse tension (NN1, NN2) indépendamment redondants pour fournir une tension de commande électrique, les réseaux basse tension (NN1, NN2) étant respectivement séparés galvaniquement l'un de l'autre, dans lequel une erreur dans l'un des réseaux basse tension (NN1, NN2) n'affecte pas une fonctionnalité de l'autre des réseaux basse tension (NN1, NN2) ; et
- deux réseaux de communication (KN1, KN2) indépendamment redondants pour transmettre des messages entre des dispositifs de commande (5 ; 6 ; 7 ; 8 ; 10) connectés aux réseaux de communication (KN1, KN2), dans lequel les deux réseaux de communication (KN1, KN2) sont respectivement séparés galvaniquement l'un de l'autre, dans lequel une erreur dans l'un des réseaux de communication (KN1, KN2) n'affecte pas une fonctionnalité de l'autre des réseaux de communication (KN1, KN2) ; et
- un dispositif de dégradation (10, 2a, 2b) pour diagnostiquer des erreurs dans les réseaux (HN1, HN2, NN1, NN2, KN1, KN2) et pour la dégradation sélective des dispositifs de commande (5 ; 6 ; 7 ; 8 ; 10) connectés aux réseaux (HN1, HN2, NN1, NN2, KN1, KN2), dans lequel le système de commande (100) offre une fonctionnalité suffisante pour le fonctionnement de conduite du véhicule,
- dans lequel les dispositifs de commande (5; 6; 7; 8; 10) sont respectivement un dispositif de commande (5; 6; 7; 8; 10) selon la revendication 1.

3. Système de commande (100) selon la revendication 2, **caractérisé en ce que** le dispositif de dégradation (10, 2a, 2b) comprend un module de diagnostic (10) pour effectuer le diagnostic, et un dispositif de gestion de batterie (2a, 2b) pour la dégradation sélective des dispositifs de commande (5 ; 6 ; 7 ; 8 ; 10), dans lequel, en fonction du résultat de diagnostic, les dispositifs de commande sont mis hors circuit de sorte que les dispositifs de commande restent suffisamment opérationnels pour un fonctionnement de conduite sûr du véhicule.

4. Système de commande (100) selon la revendication 3, **caractérisé en ce que** le mode diagnostic (10) permet d'initier et d'effectuer un diagnostic préventif et/ou réel des lignes connectées aux réseaux (HN1, HN2, NN1, NN2, KN1, KN2) et une mise hors circuit sélective de dispositifs de commande connectés aux réseaux (HN1, HN2, NN1, NN2, KN1, KN2), dans lequel un diagnostic préventif est un diagnostic avant l'apparition d'une erreur issue du réseau associé, et dans lequel un diagnostic réel est un diagnostic dû à des valeurs de mesure déterminées et des informations de message.

5. Système de commande (100) selon l'une quelconque des revendications 2 à 4, **caractérisé en ce qu'**en cas d'erreur d'un réseau haute tension (HN1, HN2), un convertisseur CC/CC (3a, 3b) peut être mis hors circuit, et un accumulateur (4) peut être mis en circuit pour l'alimentation électrique d'un des réseaux basse tension (NN1, NN2).

6. Système de commande (100) selon l'une quelconque des revendications 2 à 5, **caractérisé en ce que** le module de diagnostic (10) et les dispositifs de gestion de batterie (2a, 2b) sont réalisés de manière à pouvoir se surveiller mutuellement.

7. Système de commande (100) selon l'une quelconque des revendications 2 à 6, **caractérisé en ce que** les dispositifs de gestion de batterie (2a, 2b) permettent de déterminer un état des réseaux (HN1, HN2, NN1, NN2, KN1, KN2), des données correspondantes pouvant être transmises par les interfaces de communication (9a, 9b).

8. Procédé permettant de faire fonctionner un véhicule, présentant les étapes consistant à :
- diagnostiquer des réseaux électriques haute tension, des réseaux électriques basse tension et des réseaux électriques de communication (HN1, HN2, NN1, NN2, KN1, KN2) d'un système de commande (100) du véhicule, respectivement réalisés de manière indépendamment redondante et en liaison fonctionnelle les uns avec les autres, dans lequel les réseaux basse tension (NN1, NN2) sont respectivement séparés galvaniquement l'un de l'autre, et dans lequel les réseaux de communication (KN1, KN2) sont respectivement séparés galvaniquement l'un de l'autre ;
- transmettre le résultat de diagnostic à des dispositifs de gestion de batterie (2a, 2b) respectivement indépendamment redondants du système de commande (100), dans lequel une erreur dans un premier dispositif de gestion de batterie n'affecte pas une fonctionnalité d'un deuxième dispositif de gestion de batterie et inversement ; et
- dégrader sélectivement des dispositifs de commande (5 ; 6 ; 7 ; 8 ; 10) connectés aux réseaux électriques haute tension, aux réseaux électriques de tension de commande et aux réseaux électriques de communication (HN1, HN2, NN1, NN2, KN1, KN2) en fonction du résultat de diagnostic de telle sorte que des dispositifs de commande (5 ; 6 ; 7 ; 8 ; 10) connectés aux réseaux électriques haute tension, aux réseaux électriques de tension de commande et aux réseaux électriques de communication (HN1, HN2, NN1, NN2, KN1, KN2) restent suffisamment opérationnels pour un fonctionnement de conduite sûr du véhicule, dans lequel, par la dégradation sélective des dispositifs de commande (5 ; 6 ; 7 ; 8 ; 10), en fonction du résultat de diagnostic, les dispositifs de commande sont mis hors circuit de telle sorte qu'une fonctionnalité minimale est maintenue pour des systèmes de sécurité du véhicule.

9. Procédé selon la revendication 8, dans lequel la mise hors circuit sélective des consommateurs électriques est retardée ou effectuée avec des signaux de commande de dégradation prédéfinis.

10. Procédé selon la revendication 8 ou 9, dans lequel une mise hors circuit sélective d'équipements électriques qui ne sont pas nécessaires pour remplir les fonctions de conduite nécessaires du véhicule est effectuée.

11. Procédé selon la revendication 10, dans lequel au moins l'un des équipements de commande : contrôleur de frein (8), contrôleur de direction (5), contrôleur de systèmes d'assistance au conducteur (7), contrôleur de gestion de moteur (8) est maintenu opérationnel pour un fonctionnement de conduite du véhicule.

12. Procédé selon l'une quelconque des revendications précédentes, dans lequel l'un des réseaux haute tension (HN1, HN2) peut être relié par un commutateur de couplage (S) à l'autre réseau haute tension (HN1, HN2).

13. Procédé selon l'une quelconque des revendications précédentes, dans lequel une mise hors circuit sélective effectuée en raison d'un diagnostic des consommateurs électriques connectés aux réseaux entraîne des commutations en douceur lors desquelles le véhicule n'effectue aucun mouvement brusque.

14. Programme informatique comprenant des moyens de code programme, conçu pour exécuter le procédé selon l'une quelconque des revendications 8 à 13 lorsqu'il est exécuté sur un dispositif de dégradation (10, 2a, 2b) ou est stocké sur un support de données lisible par ordinateur.
